# EUROPEAN PATENT SPECIFICATION

(11) **EP 2 153 556 B1**
(45) Date of publication and mention of the grant of the patent: **15.03.2017**
(21) Application number: 08827134.1
(22) Date of filing: 30.05.2008
(51) Int. Cl.: H04B 10/2575, H04B 10/548, H04N 7/22

(54) **FREQUENCY MODULATED BURST MODE TRANSMITTER**
FREQUENZMODULIERTER VERSTÄRKUNGSMODUS-SENDER
ÉMETTEUR EN MODE RAFALE À MODULATION DE FRÉQUENCE

(30) Priority: 13.06.2007 US 762291
(43) Date of publication of application: 17.02.2010
(73) Proprietor: Cisco Technology, Inc., San Jose, CA 95134 (US)
(72) Inventor: WEST, Lamar, E., Jr., Maysville, Georgia 30558 (US); IBERLINGS, Pieter, G., Norcross, Georgia 30093 (US)
(74) Representative: Mathys & Squire LLP
(86) International application number: PCT/US2008/065185
(87) International publication number: WO 2009/020692

(56) References cited:
- WO-A-03/005611
- WO-A-2004/014010
- WO-A-2005/112309
- US-A1- 2002 154 371
- US-A1- 2003 121 056
- KIKUSHIMA KOJI ET AL: "Simultaneous optical transmission of AM-VSB/64-QAM/FM/TC8PSK/QPSK multi-channel television signals by super-wideband FM and BS/CS-RF conversion techniques" COMPENDEX,, vol. E89-B, no. 11, 1 November 2006 (2006-11-01), pages 3008-3020, XP002486906
- JUIN-HUNG CHEN ET AL: "FM Subcarrier Fiber Optical Transmission System Design and Its Application in Next-Generation Wireless Access" JOURNAL OF LIGHTWAVE TECHNOLOGY, IEEE SERVICE CENTER, NEW YORK, NY, US, vol. 16, no. 7, 1 July 1998 (1998-07-01), XP011029166 ISSN: 0733-8724

## Description

### TECHNICAL FIELD

The present invention is generally related to a communications system and, more particularly, is related to systems and methods for transmitting reverse optical signals by a frequency modulated burst mode transmitter.

### BACKGROUND OF THE INVENTION

Hybrid fiber/coaxial (HFC) communications systems transmit signals in a forward and reverse path between a headend and a plurality of subscribers. In the reverse path, a coaxial cable feeder portion connects the subscriber equipment (e.g., cable modems, digital set-top boxes) with an optical node, which conventionally converts the radio frequency (RF) signals received from the subscriber equipment to optical signals, that sits at the input of an optical link. Subsequently, the optical link connects the reverse path from the optical node to a hub or headend where they are processed accordingly.

Lasers used for reverse path signaling in the conventional approach to HFC network design are intensity modulated by the radio frequency (RF) electrical signals that contain information for transmission in the reverse path. Ideally the light intensity from these lasers is proportional to the electrical signals. The light is launched down a reverse path optical fiber and is attenuated by an amount that is a function of the length of that fiber. RF output power levels from conventional optical receivers are a function of the received optical input power. Variations in the length of optical fibers throughout the HFC network result in variations in the received optical power at the input of each optical receiver. Consequently, RF output power is manually adjusted at each optical receiver to compensate for variations in optical loss from link to link. Therefore, there is a need to address the deficiencies and/or inadequacies of reverse optical transmitters.

US 2002/0154371 discloses a burst-mode optical transmitter having a carrier-detect circuit arranged to activate or deactivate a laser of the transmitter. An optical transmission system using FM modulation is described in "FM Subcarrier Fiber Optical Transmission System Design and Its Application in Next-Generation Wireless Access", Chen et al., IEEE Journal of Lightwave Technology, vol. 16 no. 7.

Aspects of the invention are set out in the independent claims. Certain preferred features are set out in the dependent claims.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is an abridged block diagram of a communications system that is suitable for use in implementing the present invention.
FIG. 2 illustrates one link in the reverse direction of the broadband communications system of FIG. 1.
FIG. 3 is a block diagram of a first embodiment of a frequency modulated burst mode optical transmitter in accordance with the present invention.
FIG. 4 is a block diagram of a frequency modulated optical receiver that is suitable for use with the frequency modulated burst mode transmitter of FIG. 3.
FIG. 5 is a block diagram of a second embodiment of a frequency modulated burst mode optical transmitter in accordance with the present invention.

### DETAILED DESCRIPTION OF THE PREFERRED EMBODIMENTS

The preferred embodiments of the invention now will be described more fully hereinafter with reference to the accompanying drawings, in which preferred embodiments of the invention are shown. The invention may, however, be embodied in many different forms and should not be construed as limited to the embodiments set forth herein; rather, these embodiments are provided so that this disclosure will be thorough and complete, and will fully convey the scope of the invention to those skilled in the art. Furthermore, all "examples" given herein are intended to be non-limiting.

The present invention is directed towards a frequency modulated burst mode transmitter. More specifically, the received reverse electrical signals are used to frequency modulate an RF carrier signal. Reverse electrical carrier signals are typically received at a frequency within the ranges from 5 MHz to 45 MHz, 5 MHz to 108 MHz, 5 MHz to 174 MHz, or 5 MHz to 88 MHz, depending upon the application. The optical transmitter frequency modulates the carrier signal at a second frequency, e.g., at 1.21 GHz. This frequency modulated 1.21 GHz signal is then used to intensity modulate an optical laser. In this manner, since the information in the carrier signal is carried in the frequency domain as opposed to the amplitude of the signal, longer fiber distances can be used due to the robust nature of the frequency modulation modulated signal. Furthermore, the optical transmitter of the present invention includes a burst mode circuit, which initially detects the presence of a carrier signal present in the reverse electrical signals. Conventional optical transmitters bias the optical laser, and the laser transports optical signals at all times regardless of the presence of a carrier signal. In conjunction with frequency modulating the carrier signals and the burst mode circuit, the optical laser does not need to be biased on continuously and can be turned on and off in the presence of a carrier signal. Accordingly, only when a carrier signal is detected does the optical transmitter transport optical signals to an optical receiver located further upstream.

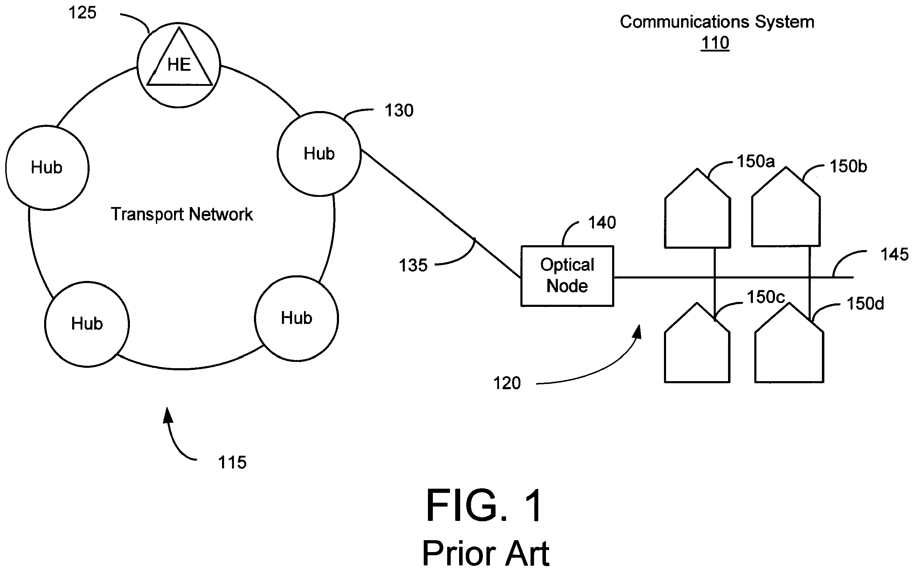

FIG. 1 is an abridged block diagram of a communications system 110 that is suitable for use in implementing the present invention. Typically, a communications system 110 includes a transport network 115 and a transmission network 120. The transport network 115, which is fiber optic cable, connects a headend 125 and hubs 130 for generating, preparing, and routing programs and other optical packets over longer distances; whereas a transmission network 120, which is coaxial cable, generally routes electrical packets over shorter distances. Programs and other information packets received, generated, and/or processed by headend equipment is either broadcasted to all subscribers in the system 110 or alternatively, the programs can be selectively delivered to one or more subscribers. Fiber optic cable 135 connects the transport network 115 to an optical node(s) 140 in order to convert the packets from optical packets into electrical packets. Thereafter, coaxial cable 145 routes the packets to one or more subscriber premises 150a-d.

In the reverse, or upstream, direction, subscriber premises equipment, such as set-top boxes or cable modems, generate reverse electrical signals. The optical node 140, which includes an optical transmitter, converts the reverse electrical signals into optical signals for further routing to the hubs 130. The hubs 130 then route the optical signals to the headend 125 for further processing.

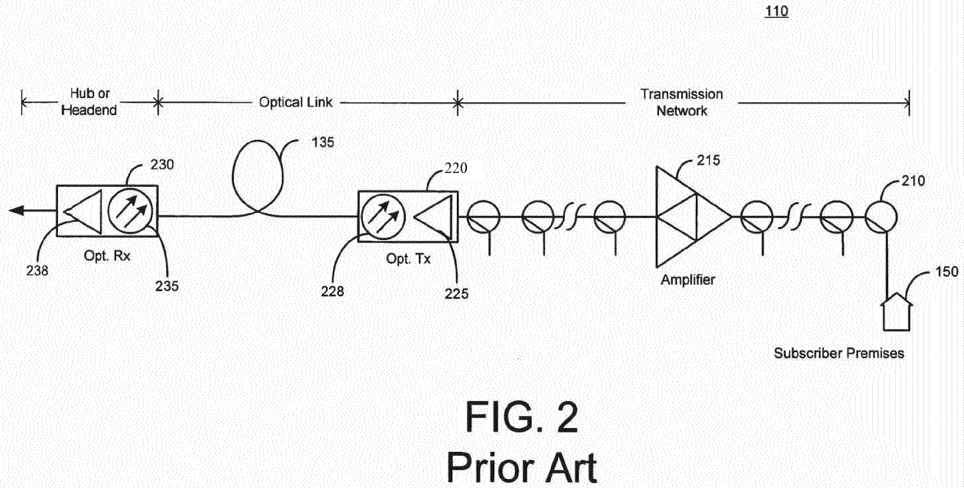

FIG. 2 illustrates one link in the reverse direction of the broadband communications system of FIG. 1. A tap 210 receives the reverse electrical signals from a subscriber 150 and combines the signals with other reverse electrical signals being transmitted on that path. An amplifier 215 amplifies the combined electrical signals as necessary. At the demarcation point between the transmission network and the optical links is the optical node 140, which includes an optical transmitter 220. Reverse electronics 225, such as amplifiers and other configuration modules, prepare the signals for conversion into optical signals by laser 228. The optical signals are then transported across optical fiber 135 to an optical receiver 230, which is included in either the headend or the hub 130. The optical receiver 230 converts the optical signals back into electrical signals via a photodiode 235 and reverse electronics 238 further condition the signal as required. The reverse electrical signals, which have been combined from various subscribers 150a-d, are then provided to headend equipment. As mentioned, however, the optical signals are susceptible to signal attenuation, in the case of analog optical signal transport, or require expensive digital electronics in order to convert the optical signals into a digital optical signal. The present invention, in contrast, transports frequency modulated optical signals where the information of the reverse signals is carried in the frequency, so that the long fiber can be used without incurring losses in the signal.

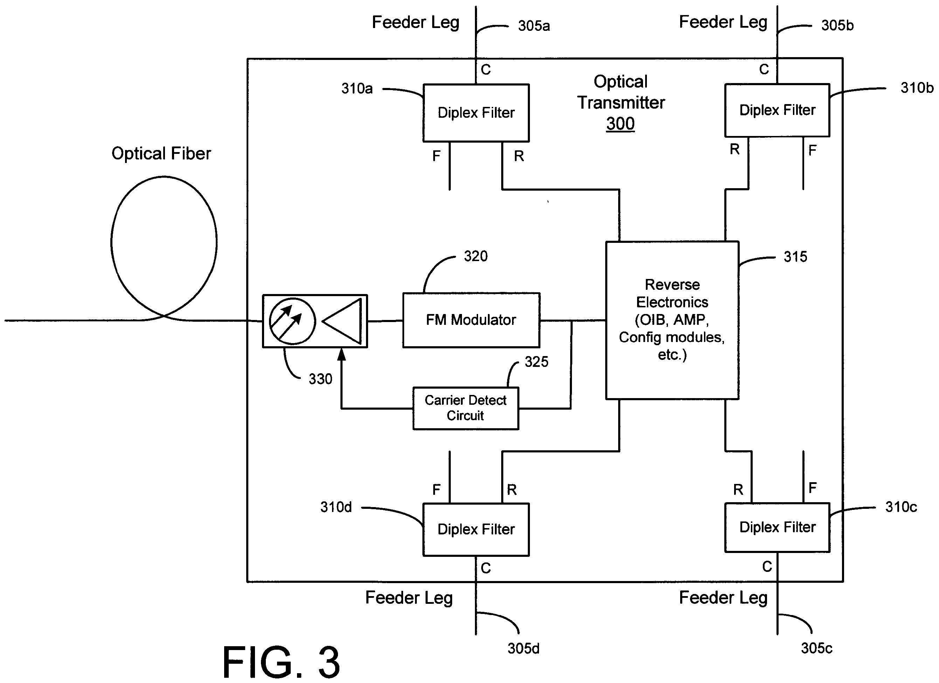

FIG. 3 is a block diagram of a first embodiment of a frequency modulated burst mode optical transmitter in accordance with the present invention. Feeder legs 305a-d receive reverse electrical signals from subscribers located on four different paths. Any number of feeder legs can be used in the optical transmitter 300. Diplex filters 310a-d then isolate the reverse electrical signals from the forward, or downstream, signals. Reverse electronics 315 then amplify, combine, and configure the signals in a known manner. Subsequently, a frequency modulation (FM) modulator 320 uses the reverse electrical signals to modulate an RF carrier signal. Most of the time, reverse electrical signals are received from the feeder legs regardless of the presence of a carrier signal, which carries the reverse information. The electrical signals are typically noise and ingress signals. Therefore, a carrier detect circuit 325 detects the presence of any carrier signals in the reverse electrical signals. The carrier detect circuit 325 controls laser 330 according to the presence of detected carrier signals. More specifically, when a carrier signal is detected, the carrier detect circuit 325 turns the laser 330 on, and then the laser is intensity modulated with the 1.21 GHz RF carrier signal that has been FM modulated with the reverse signals. When a carrier signal is not detected, the laser 330 is turned off, thereby not allowing any frequency modulated electrical signals to be transmitted further upstream. Further information regarding transmitting optical signals that were frequency modulated can be found in copending U. S. patent application US2008/0220731 entitled "Reverse Path Optical Link using Frequency Modulation," filed on March 8, 2007.

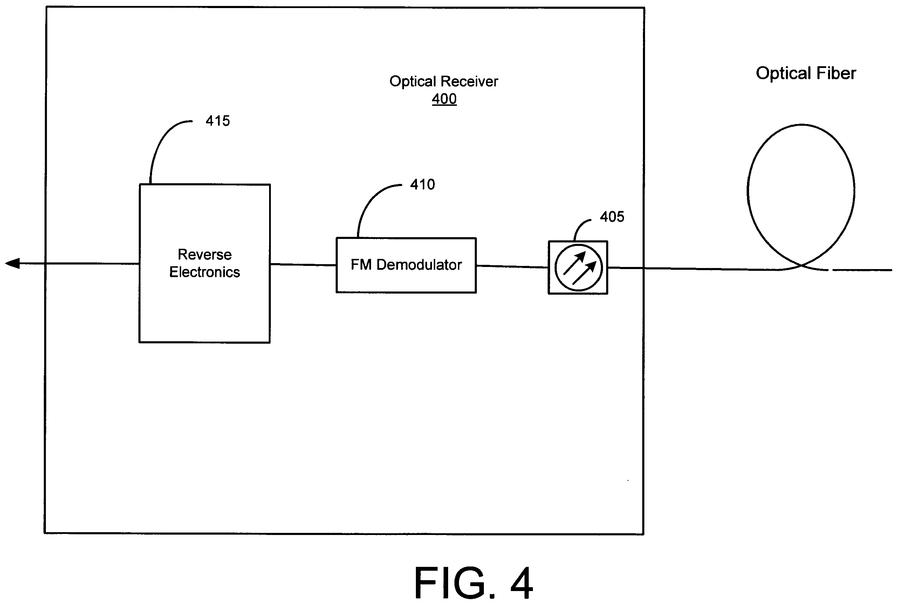

FIG. 4 is a block diagram of a frequency modulated optical receiver 400 that is suitable for use with the frequency modulated burst mode transmitter of FIG. 3. The reverse optical receiver 400, which is coupled to the reverse optical transmitter 300, receives the optical signal that is present only when reverse signals in the reverse band are present at the input to the carrier detect circuit 320 in the burst mode optical transmitter. A photodiode 405 converts the optical signals back into electrical signals. Subsequently, a frequency modulation demodulator 410 demodulates the electrical signals. Reverse electronics 415 further condition the signal prior to further transmission to headend equipment.

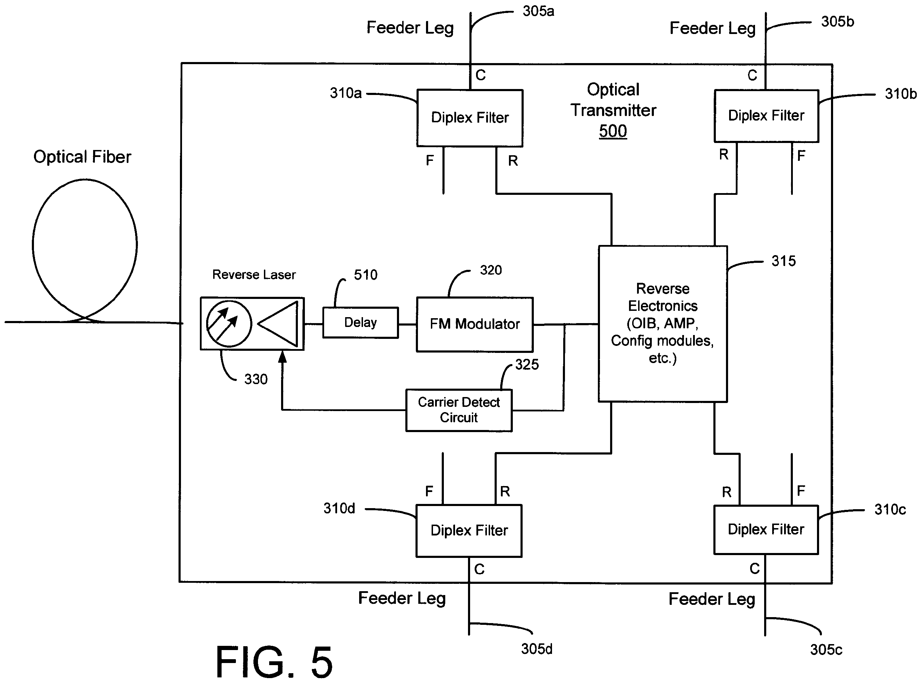

FIG. 5 is a block diagram of a second embodiment of a frequency modulated burst mode optical transmitter in accordance with the present invention. The second embodiment includes a delay circuit 510. Accordingly, the delay circuit 510 delays the frequency modulated electrical signals by an appropriate time in order to allow the carrier detect circuit 325 to detect the presence of a carrier signal and then turn on the laser 330. In this manner, reverse signals are not lost due to any time delays by the carrier detect circuit.

Accordingly, systems and methods have been described that enable a frequency modulated burst mode optical transmitter. It should be emphasized that the above-described embodiments of the present invention, particularly, any "preferred" embodiments, are merely possible examples of implementations, merely set forth for a clear understanding of the principles of the invention.

## Claims

1. A method for transmitting burst mode optical signals, the method comprising the steps of:
receiving reverse electrical signals; and
detecting a carrier signal transmitted within the reverse electrical signals via a carrier signal detecting means (325); **characterized in that** the method further comprises:
outputting the reverse electrical signals to a frequency modulation means (320) for frequency modulating the reverse electrical signals;
controlling the frequency modulation means (320) by the carrier signal detecting means (325) such that, without the presence of a carrier signal, the reverse electrical signals are prevented from being converted into frequency modulated reverse electrical signals; and
only in the presence of the detected carrier signal, intensity modulating the frequency modulated reverse electrical signals into optical signals via an optical modulation means (330).

2. The method of claim 1, further comprising the steps of:
receiving the optical signals;
converting the optical signals into the frequency modulated reverse electrical signals; and
demodulating the frequency modulated reverse electrical signals.

3. The method of claim 1, wherein the reverse electrical signals are transmitted in a predetermined reverse band.

4. The method of claim 3, wherein the reverse electrical signals are frequency modulated with a predetermined GHz signal.

5. The method of claim 1, further comprising the step of, without the presence of a carrier signal, preventing the frequency modulated reverse electrical signals from being converted into optical signals.

6. The method of claim 1, further comprising the step of the carrier signal detecting means (325) controlling the optical modulation means (330).

7. The method of claim 1, further comprising the step of delaying the frequency modulated reverse electrical signals.

8. A method for transmitting and receiving burst mode optical signals, the method comprising the steps of the method of claim 1 and the following steps:
transmitting the optical signals generated by the optical modulation means (330) along optical fiber;
at an optical receiver, converting the optical signals into the frequency modulated reverse electrical signals; and
demodulating the frequency modulated reverse electrical signals.

9. The method of claim 8, further comprising the step of, without the presence of a carrier signal, preventing the electrical signals from being converted into optical signals.

10. The method of claim 8, further comprising the step of, the carrier detect circuit (325) controlling the optical intensity modulation modulator (330).

11. The method of claim 8, further comprising the step of delaying the frequency modulated electrical signals by a predetermined time.

12. A system for transmitting and receiving burst mode optical signals, the system comprising:
an optical transmitter (330) for receiving reverse electrical signals, and for converting the reverse electrical signals into frequency modulated signals and intensity modulating the frequency modulated signals into optical signals only in the presence of a carrier signal; and an optical receiver (400) for receiving the optical signals having a carrier signal and for converting the optical signals back into the reverse electrical signals, the optical transmitter comprising:
a carrier detect circuit (325) for detecting the presence of a carrier signal;
a frequency modulation modulator (320) for frequency modulating the reverse electrical signals; and
an optical laser (330) for intensity modulating the frequency modulated reverse electrical signals to provide the optical signals;
wherein the carrier detect circuit (325) controls an input of the frequency modulation modulator (320), wherein, in the presence of a carrier signal, the frequency modulation modulator receives the reverse electrical signals at the input, and wherein, without the presence of a carrier signal, the reverse electrical signals are dropped prior to the input of the frequency modulation modulator.

13. The system of claim 12, wherein the carrier detect circuit (325) controls the optical laser (330), wherein, in the presence of a carrier signal, the optical laser is turned on, and wherein, without the presence of a carrier signal, the optical laser is turned off.

14. The system of claim 12, further comprising a delay circuit (510) positioned between the frequency modulation modulator (320) and the optical laser (330), the delay circuit for delaying the frequency modulated electrical signals by a predetermined time.

## Patentansprüche

1. Verfahren zum Senden von optischen Signalen im Burst-Modus, das folgende Schritte umfasst:
Empfangen von elektrischen Rückwärtssignalen und
Erkennen eines Trägersignals, das innerhalb der elektrischen Rückwärtssignale gesendet wird, über ein Trägersignalerkennungsmittel (325), **dadurch gekennzeichnet, dass** das Verfahren ferner Folgendes umfasst:
Ausgeben der elektrischen Rückwärtssignale an ein Frequenzmodulationsmittel (320) zum Frequenzmodulieren der elektrischen Rückwärtssignale,
derartiges Steuern des Frequenzmodulationsmittels (320) durch das Trägersignalerkennungsmittel (325), dass bei fehlendem Trägersignal ein Umwandeln der elektrischen Rückwärtssignale in frequenzmodulierte elektrische Rückwärtssignale verhindert wird, und
Intensitätsmodulieren der frequenzmodulierten elektrischen Rückwärtssignale in optische Signale über ein optisches Modulationsmittel (330) nur bei Vorliegen des erkannten Trägersignals.

2. Verfahren nach Anspruch 1, das ferner folgende weitere Schritte umfasst:
Empfangen der optischen Signale,
Umwandeln der optischen Signale in frequenzmodulierte elektrische Rückwärtssignale und
Demodulieren der frequenzmodulierten elektrischen Rückwärtssignale.

3. Verfahren nach Anspruch 1, bei dem die elektrischen Rückwärtssignale in einem vorgegebenen Rückwärtsband gesendet werden.

4. Verfahren nach Anspruch 3, bei dem die elektrischen Rückwärtssignale mit einem vorgegebenen GHz-Signal frequenzmoduliert werden.

5. Verfahren nach Anspruch 1, das ferner bei fehlendem Trägersignal das Verhindern umfasst, dass die frequenzmodulierten elektrischen Rückwärtssignale in optische Signale umgewandelt werden.

6. Verfahren nach Anspruch 1, das ferner das Steuern des optischen Modulationsmittels (330) durch das Trägersignalerkennungsmittel (325) umfasst.

7. Verfahren nach Anspruch 1, das ferner das Verzögern der frequenzmodulierten elektrischen Rückwärtssignale umfasst.

8. Verfahren zum Senden und Empfangen von optischen Signalen im Burst-Modus, das die Verfahrensschritte aus Anspruch 1 und folgende Schritte umfasst:
Senden der von dem optischen Modulationsmittel (330) erzeugten optischen Signale durch Lichtwellenleiter,
Umwandeln der optischen Signale in die frequenzmodulierten elektrischen Rückwärtssignale an einem optischen Empfänger und
Demodulieren der frequenzmodulierten elektrischen Rückwärtssignale.

9. Verfahren nach Anspruch 8, das ferner bei fehlendem Trägersignal das Verhindern umfasst, dass die elektrischen Signale in optische Signale umgewandelt werden.

10. Verfahren nach Anspruch 8, das ferner das Steuern des optischen Intensitätsmodulators (330) durch die Trägererkennungsschaltung (325) umfasst.

11. Verfahren nach Anspruch 8, das ferner das Verzögern der frequenzmodulierten elektrischen Signale um eine vorgegebene Zeit umfasst.

12. System zum Senden und Empfangen von optischen Signalen im Burst-Modus, das Folgendes umfasst:
einen optischen Sender (330) zum Empfangen von elektrischen Rückwärtssignalen und zum Umwandeln der elektrischen Rückwärtssignale in frequenzmodulierte Signale und Intensitätsmodulieren der frequenzmodulierten Signale in optische Signale nur bei Vorliegen eines Trägersignals und einen optischen Empfänger (400) zum Empfangen der optischen Signale mit einem Trägersignal und zum Umwandeln der optischen Signale zurück in die elektrischen Rückwärtssignale, wobei der optische Sender Folgendes umfasst:
eine Trägererkennungsschaltung (325) zum Erkennen des Vorliegens eines Trägersignals,
einen Frequenzmodulationsmodulator (320) zum Frequenzmodulieren der elektrischen Rückwärtssignale und
einen optischen Laser (330) zum Intensitätsmodulieren der frequenzmodulierten elektrischen Rückwärtssignale zwecks Bereitstellen der optischen Signale,
wobei die Trägererkennungsschaltung (325) einen Eingang des Frequenzmodulationsmodulators (320) steuert, wobei der Frequenzmodulationsmodulator bei Vorliegen eines Trägersignals die elektrischen Rückwärtssignale am Eingang empfängt und die elektrischen Rückwärtssignale bei fehlendem Trägersignal vor dem Eingang des Frequenzmodulationsmodulators wegfallen.

13. System nach Anspruch 12, bei dem die Trägererkennungsschaltung (325) den optischen Laser (330) steuert, wobei der optische Laser bei Vorliegen eines Trägersignals eingeschaltet und bei fehlendem Trägersignal ausgeschaltet ist.

14. System nach Anspruch 12, das ferner eine Verzögerungsschaltung (510) umfasst, die zwischen dem Frequenzmodulationsmodulator (320) und dem optischen Laser (330) angeordnet ist, wobei die Verzögerungsschaltung zum Verzögern der frequenzmodulierten elektrischen Signale um eine vorgegebene Zeit dient.

## Revendications

1. Procédé de transmission de signaux optiques en mode rafale, le procédé comprenant les étapes consistant à :
recevoir des signaux électriques inverses ; et
détecter un signal porteur transmis dans les signaux électriques inverses par l'intermédiaire d'un moyen de détection de signal porteur (325) ; le procédé étant **caractérisé en ce qu'**il consiste en outre à :
émettre les signaux électriques inverses vers un moyen de modulation de fréquence (320) permettant de moduler en fréquence les signaux électriques inverses ;
commander le moyen de modulation de fréquence (320) par le moyen de détection de signal porteur (325) de manière à empêcher, sans la présence d'un signal porteur, les signaux électriques inverses d'être convertis en signaux électriques inverses modulés en fréquence ; et
uniquement en présence du signal porteur détecté, moduler en intensité les signaux électriques inverses modulés en fréquence en signaux optiques par l'intermédiaire d'un moyen de modulation optique (330).

2. Procédé selon la revendication 1, comprenant en outre les étapes consistant à :
recevoir les signaux optiques ;
convertir les signaux optiques en signaux électriques inverses modulés en fréquence ; et
démoduler les signaux électriques inverses modulés en fréquence.

3. Procédé selon la revendication 1, dans lequel les signaux électriques inverses sont transmis dans une bande inverse prédéterminée.

4. Procédé selon la revendication 3, dans lequel les signaux électriques inverses sont modulés en fréquence avec un signal en GHz prédéterminé.

5. Procédé selon la revendication 1, comprenant en outre l'étape consistant à, sans la présence d'un signal porteur, empêcher les signaux électriques inverses modulés en fréquence d'être convertis en signaux optiques.

6. Procédé selon la revendication 1, comprenant en outre l'étape consistant à ce que le moyen de détection de signal (325) commande le moyen de modulation optique (330).

7. Procédé selon la revendication 1, comprenant en outre l'étape consistant à retarder les signaux électriques inverses modulés en fréquence.

8. Procédé de transmission et de réception de signaux optiques en mode rafale, le procédé comprenant les étapes du procédé selon la revendication 1 et les étapes suivantes consistant à :
transmettre les signaux optiques générés par le moyen de modulation optique (330) le long d'une fibre optique ;
au niveau d'un récepteur optique, convertir les signaux optiques en signaux électriques inverses modulés en fréquence ; et
démoduler les signaux électriques inverses modulés en fréquence.

9. Procédé selon la revendication 8, comprenant en outre l'étape consistant à, sans la présence d'un signal porteur, empêcher les signaux électriques d'être convertis en signaux optiques.

10. Procédé selon la revendication 8, comprenant en outre l'étape consistant à ce que le circuit de détection de porteuse (325) commande le modulateur de modulation d'intensité optique (330).

11. Procédé selon la revendication 8, comprenant en outre l'étape consistant à retarder les signaux électriques modulés en fréquence d'une durée prédéterminée.

12. Système de transmission et de réception de signaux optiques en mode rafale, le système comprenant :
un émetteur optique (330) permettant de recevoir des signaux électriques inverses, et de convertir les signaux électriques inverses en signaux modulés en fréquence, et de moduler en intensité les signaux modulés en fréquence en signaux optiques uniquement en présence d'un signal porteur ; et un récepteur optique (400) permettant de recevoir les signaux optiques ayant un signal porteur, et de reconvertir les signaux optiques en signaux électriques inverses, l'émetteur optique comprenant :
un circuit de détection de porteuse (325) permettant de détecter la présence d'un signal porteur ;
un modulateur de modulation de fréquence (320) permettant de moduler en fréquence les signaux électriques inverses ; et
un laser optique (330) permettant de moduler en intensité les signaux électriques inverses modulés en fréquence afin de fournir les signaux optiques ;
dans lequel le circuit de détection de porteuse (325) commande une entrée du modulateur de modulation de fréquence (320), dans lequel, en présence d'un signal porteur, le modulateur de modulation de fréquence reçoit les signaux électriques inverses au niveau de l'entrée, et dans lequel, sans la présence d'un signal porteur, les signaux électriques inverses sont ignorés avant l'entrée du modulateur de modulation de fréquence.

13. Système selon la revendication 12, dans lequel le circuit de détection de signal porteur (325) commande le laser optique (330), dans lequel, en présence d'un signal porteur, le laser optique est allumé, et dans lequel, sans la présence d'un signal porteur, le laser optique est éteint.

14. Système selon la revendication 12, comprenant en outre un circuit de retard (510) positionné entre le modulateur de modulation de fréquence (320) et le laser optique (330), le circuit de retard permettant de retarder les signaux électriques modulés en fréquence d'une durée prédéterminée.
